# FASCICULE DE BREVET EUROPEEN

(11) **EP 2 613 925 B1**
(45) Date de publication et mention de la délivrance du brevet: **14.01.2015**
(21) Numéro de dépôt: 11752240.9
(22) Date de dépôt: 06.09.2011
(51) Int. Cl.: B29C 70/08, B29C 70/32, B29C 70/86, D04C 1/06, B29C 70/22, B29C 70/48

(54) **PROCEDE DE FABRICATION DE PIECES EN MATERIAUX COMPOSITES, AVEC REVETEMENT TRESSE**
VERFAHREN ZUR HERSTELLUNG VON TEILEN AUS VERBUNDSTOFFEN MIT GEFLOCHTENER VERKLEIDUNG
METHOD FOR PRODUCING PARTS MADE FROM COMPOSITE MATERIALS WITH A BRAIDED COVERING

(30) Priorité: 06.09.2010 FR 1057071
(43) Date de publication de la demande: 17.07.2013
(73) Titulaire: Messier-Bugatti-Dowty, 78140 Vélizy-Villacoublay (FR); Aircelle, 76700 Gonfreville l'Orcher (FR)
(72) Inventeur: MASSON, Richard, F-78350 Les Loges En Josas (FR); DESJOYEAUX, Bertrand, F-76310 Sainte Adresse (FR); DUNLEAVY, Patrick, F-91120 Palaiseau (FR)
(74) Mandataire: Parzy, Benjamin Alain
(86) Numéro de dépôt international: PCT/EP2011/065397
(87) Numéro de publication internationale: WO 2012/032049

(56) Documents cités:
- WO-A1-98/51481
- WO-A1-2006/118448

## Description

L'invention est relative à un procédé de fabrication de pièces en matériaux composites, avec revêtement tressé.

### ARRIERE-PLAN TECHNOLOGIQUE

On connaît des pièces fabriquées à l'aide d'un mandrin creux passé au travers de l'orifice central d'une machine à tresser de sorte à recouvrir le mandrin d'une ou de plusieurs revêtements de fibres tressés. L'ensemble est ensuite soumis à infusion ou injection de résine, puis chauffé pour provoquer la polymérisation de la résine.

Cependant, le tressage ne permet pas de grandes variations d'épaisseur des revêtements ainsi réalisés. Tout au plus, en ralentissant la vitesse de déplacement du mandrin dans la tresseuse, il est possible d'augmenter marginalement l'épaisseur du revêtement tressé. Ceci rend difficile, voir impossible la réalisation par tressage de pièces à épaisseurs localement variables.

Il a été proposé dans le document FR2890591 de réaliser une pièce comportant une préforme fibreuse renforcée par des bandes de tissu de fibres monodirectionnelles préimprégnées, s'étendant selon une direction longitudinale de la pièce afin de renforcer ladite pièce, notamment en compression.

On connaît également du document WO 2006/118448 un procédé de renforcement de pièces en fibres tressées, comportant l'étape d'insérer des corps de renfort plats positionnés manuellement ou à l'aide d'un robot. Ces renforts plats sont constitués par un certain nombre de couches de tissus de fibres qui ont été solidarisées entre elles lors d'une étape préalable au moyen d'un liant thermoplastique, le tout soumis à température et pression élevées. Cependant, ce type de renfort présente l'inconvénient d'être très rigide.

### OBJET DE L'INVENTION

L'invention a pour objet un procédé de réalisation de pièces en matériaux composites à revêtements tressés comportant des variations d'épaisseur significatives.

### BREVE DESCRIPTION DE L'INVENTION

En vue de la réalisation de ce but, on propose un procédé de réalisation d'une pièce en matériau composite comportant les étapes de :
- production d'un mandrin ;
- tressage d'un revêtement autour du mandrin, épousant au mieux les formes du mandrin ;
- application locale sur le revêtement tressé de patchs de fibres, jusqu'à obtenir localement un empilement de patchs ayant la forme désirée, chaque patch étant conformé de sorte à présenter une déformabilité suffisante pour épouser intimement le revêtement tressé ou le patch sur lequel il est appliqué ;
- répétition des deux étapes précédentes en tant que de besoin jusqu'à obtenir une préforme ;
- tressage d'un revêtement tressé externe recouvrant l'ensemble ;
- apport de résine et polymérisation de celle-ci.

Le procédé de l'invention permet de créer des surépaisseurs locales dans les endroits sollicités de la pièce. En outre, plutôt que de partir d'un mandrin avec des formes très évolutives difficilement couvrables par un ou des revêtements tressés, on peut partir d'un mandrin aux formes plus douces, que l'on recouvre d'un revêtement tressé, et sur lequel on vient construire les formes plus évolutives en empilant localement des patchs de tissus découpés pour obtenir la forme désirée et suffisamment déformables pour épouser intimement la forme sur laquelle ils sont appliqués.

Les patchs sont découpés dans des tissus unidirectionnels préimprégnés, ou encore découpés dans des tissus secs, par exemple des tissus à motif sergé, très déformables. Une légère imprégnation de résine des tissus contribuera à la mise en forme des patchs avant leur apposition sur le revêtement tressé, au moyen d'une prépolymérisation en forme. Le cas échéant, le ou les patchs peuvent être constitués de plusieurs épaisseurs de tissus, à la condition toutefois que le patch ainsi constitué reste suffisamment déformable pour épouser intimement la forme sur laquelle il est appliqué.

Les étapes de tressage et d'apposition de patchs du procédé de l'invention pourront être répétées plusieurs fois. On pourra ainsi faire varier à volonté l'épaisseur de fibres en toute zone de la préforme.

### BREVE DESCRIPTION DES FIGURES

L'invention sera mieux comprise à la lumière de la description qui suit d'un mode particulier de mise en oeuvre du procédé de l'invention, en référence aux figures des dessins annexés parmi lesquelles :
- la figure 1 est une vue en perspective d'un balancier d'atterrisseur réalisé selon l'invention ;
- la figure 2 est une vue partielle d'un mandrin déjà recouvert d'une préforme tressée destiné à produire le balancier de la figure 1, sur laquelle des patchs de tissu sont rapportés localement selon l'invention ;
- la figure 3 est une vue éclatée des patchs de tissu rapportés ;
- la figure 4 est une vue partielle du même mandrin recouvert d'autres patchs de tissu en un autre endroit ;
- la figure 5 est une vue en coupe selon le plan V de la figure 1, avant usinage du balancier ;
- la figure 6 est une vue en coupe selon le plan VI de la figure 1, avant usinage du balancier ;
- la figure 7 est une demie-vue en coupe longitudinale selon le plan VII de la figure 1, après usinage du balancier.

### DESCRIPTION DETAILLEE DES FIGURES

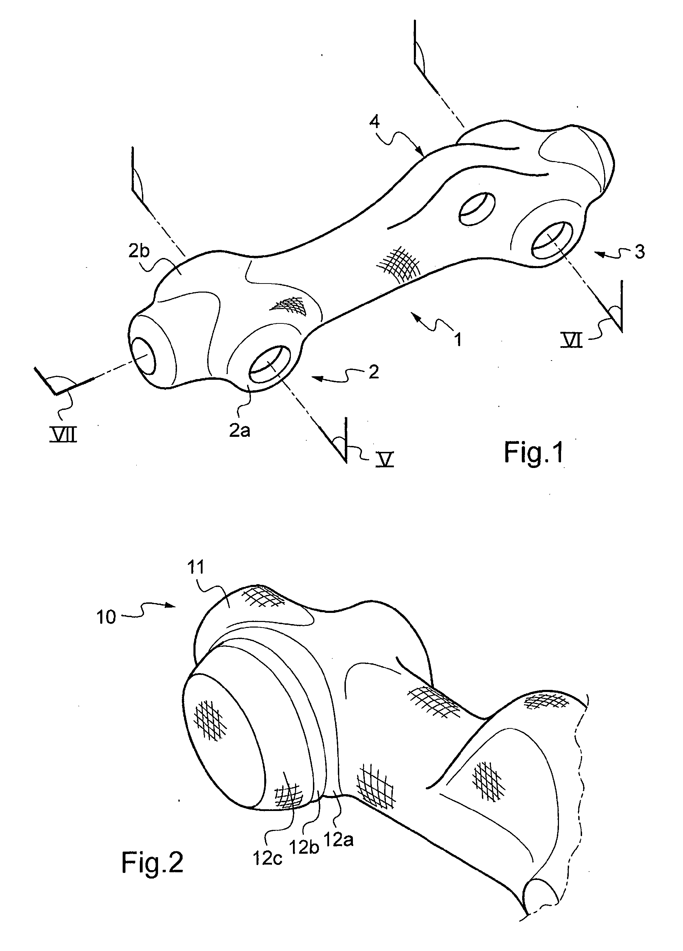

L'invention est ici décrite en relation avec un balancier d'atterrisseur comme celui illustré à la figure 1 comportant un corps 1 ayant une première extrémité 2 conformée pour recevoir un pivot pour l'articulation du balancier sur l'atterrisseur, et une deuxième extrémité 3 conformée pour recevoir un essieu destiné à recevoir des roues. Le balancier comporte également une excroissance 4 sur sa partie supérieure pour recevoir un axe de liaison à un amortisseur.

Comme cela est particulièrement visible, la première extrémité comporte deux renflements 2a, 2b latéraux proéminents, dans lesquels ont été percés les orifices permettant le passage du pivot, ces orifices étant destinés à être équipés de bagues.

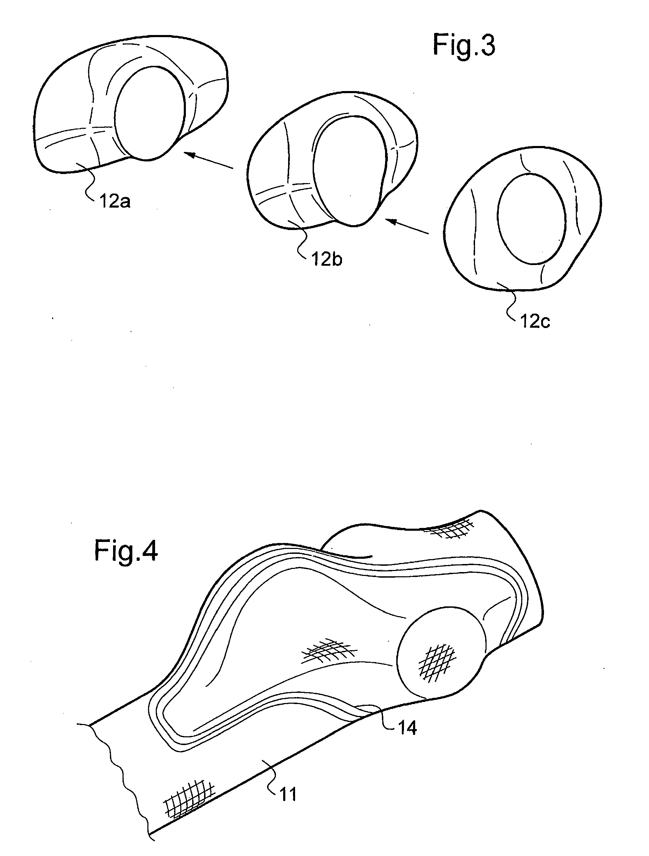

Comme illustré à la figure 2 on commence par produire un mandrin 10 aux formes progressivement évolutives, que l'on commence par recouvrir d'un revêtement tressé 11, ici en fibres de carbone. Puis on rapporte sur le mandrin ainsi recouvert une série 12 de patchs superposés, découpés chacun dans du tissu sec de fibres de carbone, aux endroits où l'on désire donner à l'ensemble des formes accentuées ou encore des épaisseurs augmentées. Ici, on a illustré une série de patchs 12a, 12b, 12c superposés les uns aux autres, et qui viennent coiffer l'une des proéminences du mandrin. On voit de l'autre côté la proéminence correspondante non encore recouverte par des patchs. Les patchs 12a, 12b ,12c sont illustrés en vue éclatée à la figure 3. De préférence, les patchs sont découpés dans un tissu sergé de fibres. L'armure sergée est connue pour permettre une grande déformabilité des tissus autorisant l'application intime du patch contre la forme qu'il recouvre. Ainsi, les patchs sont mis en forme par application intime contre le revêtement tressé ou le patch qu'ils recouvrent. Selon un mode particulier de réalisation, les patchs sont au moins partiellement formés (ici en coque) avant leur application sur le tressage recouvrant le mandrin, ce qui aide à la mise en place des patchs, et notamment à leur positionnement. A cet effet, on utilise avantageusement du tissu préimprégné de résine, les patchs étant prépolymérisés en forme avant d'être appliqués sur le revêtement tressé. On veillera cependant à ce que les patchs ainsi préformés restent suffisamment déformables pour pouvoir être appliqués le plus intimement possible contre le revêtement tressé ou le patch qu'ils recouvrent.

De façon similaire, la figure 4 illustre l'application de patchs 14 contre le tressage recouvrant le mandrin au niveau de l'excroissance 4. Ici, le patch recouvre à la fois une moitié de l'excroissance 4 et la protubérance 3 adjacente.

Les patchs sont de préférence maintenus en position sur le tressage 11 recouvrant le mandrin 10 par pulvérisation de résine, ou application de tout autre liant permettant de fixer les patchs sur le mandrin de façon suffisamment solide pour que le mandrin 10 ainsi équipé puisse repasser dans la tresseuse sans que les patchs ne bougent ou se détachent. De préférence, l'orientation des fibres des patchs sera choisie de façon complémentaire à l'orientation des fibres des revêtements tressés afin d'optimiser la structure finale.

Puis, en tant que de besoin, on recommence les deux étapes de tressage et d'application de patchs. De préférence, on recouvre l'ensemble ainsi constitué d'un tressage final. Bien sûr, l'empilement ainsi constitué des patchs et des revêtements tressés est choisi de sorte à permettre le recouvrement de l'ensemble par un revêtement tressé externe final. En particulier, la forme externe sera avantageusement progressivement variable, en limitant les variations brutales d'épaisseur pour que le tressage final puisse épouser la forme externe. Ceci vaut bien évidement pour les tressages intermédiaires.

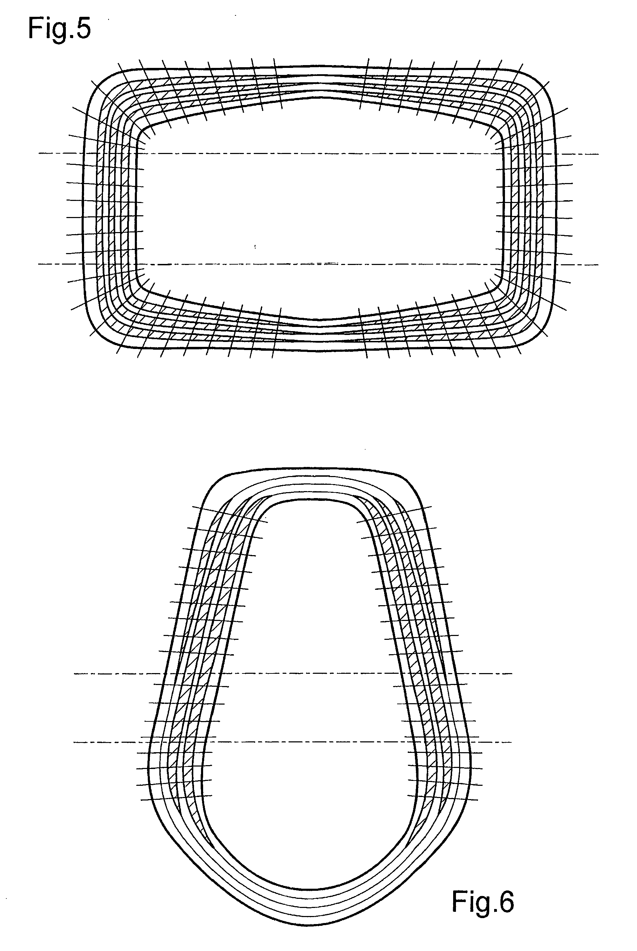

Aux figures 5, 6, il a été illustré de façon schématique les séries successives de patchs (formes hachurées) séparées par des revêtements tressés. Dans les zones d'accumulation des patchs, les formes initiales du mandrin sont singulièrement transformées pour aboutir aux formes et épaisseurs recherchées sur la pièce finale.

Avantageusement la zone ainsi recouverte de patchs est renforcée, lorsque l'empilage est terminé, par insertion de fibres transverses (symbolisé par les traits transverses sur les figures 5, 6), par exemple par piquage ou encore par couture. Ce renforcement participe au maintien en place des patchs entre les revêtements tressés avant injection et polymérisation de la résine. Il reste à demeure et fait donc partie intégrante de la pièce lorsque celle-ci est finie, ce qui diminue fortement les risques de délaminage dus au montage de l'essieu ou de l'axe qui sera introduit dans l'orifice usiné au travers des zones renforcées.

Le piquage est illustré aux figures 5 et 6 par des traits traversant les revêtements tressés et les patchs (hachurés). Ici les patchs ont été piqués sur toute leur surface. Cependant, dans les endroits destinés à être percés (symbolisés par les pointillés), on pourra se passer de piquage.

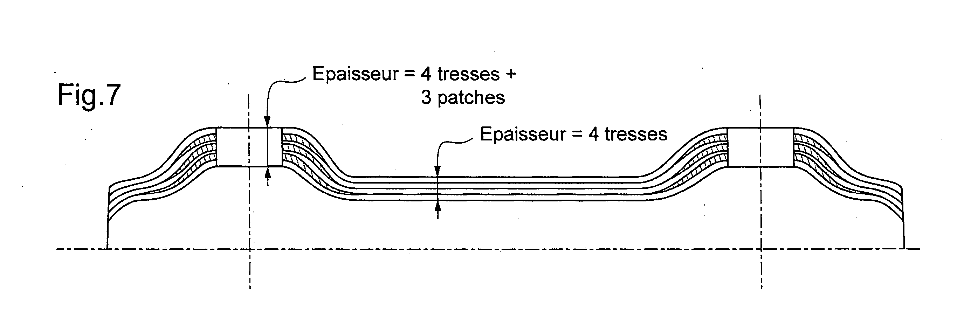

On voit à la figure 7 l'évolution des épaisseurs du balancier. Dans la partie centrale, l'épaisseur de la partie courante est constituée de quatre couches tressées, tandis que dans les parties 2 et 3, l'épaisseur est constituée de quatre couches tressées entre lesquelles sont interposées trois séries de patchs (hachurés).

La préforme ainsi constituée reçoit de la résine par injection, infusion, ou tout autre procédé connu, puis la résine est polymérisée pour obtenir la pièce finale presque finie. De préférence, on place la préforme dans un moule. La résine est injectée dans le moule, puis l'ensemble est soumis à chauffage, et, le cas échéant, compression isostatique. Il reste alors à percer les orifices et les munir le cas échéant de bagues.

L'invention n'est bien sûr pas limitée à ce qui vient d'être décrit, mais englobe au contraire toute variante entrant dans le cadre défini par les revendications. En particulier, bien qu'ici les patchs et les tressages sont constitués de fibres de carbone, il va de soi que l'invention se généralise à toute autre fibre technique, comme de la fibre de verre ou d'aramide.

Bien que les patchs soient ici découpés dans du tissu sergé, on pourra découper les patches dans des tissus autrement armurés, ou encore dans des tissus multicouche cousus, de façon à optimiser les orientations des fibres dans les zones d'application des patchs en fonction des directions des efforts. Bien entendu, les patchs doivent rester suffisamment déformables pour pouvoir être appliqués le plus intimement possible contre la surface qu'ils recouvrent. En variante encore, les patchs pourront être réalisés par un dépôt d'une nappe de fibres, par exemple par une opération de dépôt filamentaire au moyen d'un robot monté sur la machine de tressage.

Bien que l'on ait indiqué que les patchs étaient maintenus en place sur le revêtement tressé par pulvérisation de résine, on pourra également les coudre in situ avec un fil de même nature que les fibres du patch, ou compatibles avec celles-ci (par exemple un fil thermoplastique).

Les étapes de tressage décrit ici consistent à appliquer un revêtement tressé par-dessus le dernier empilage de patchs, chaque revêtement tressé pourra comporter une ou plusieurs couches tressées, le cas échéant solidarisées entre elles (interlocking).

L'invention s'applique bien évidemment à toute pièce pouvant être fabriquée par tressage, comme un balancier destiné à recevoir. 4 ou 6 roues avec articulation centrale, un bras de contrefiche ou une bielle.

## Revendications

1. Procédé de réalisation d'une pièce en matériau composite comportant les étapes de :
- production d'un mandrin ;
- tressage d'un revêtement (11) en fibres autour du mandrin, épousant au mieux les formes du mandrin ;
- application locale sur le revêtement tressé d'au moins un patch (12a, 12b, 12c ; 14) de fibres, chaque patch étant conformé de sorte à présenter une déformabilité suffisante pour épouser intimement le revêtement tressé ou le patch sur lequel il est appliqué ;
- répétition des deux étapes de tressage et d'application de patch en tant que de besoin jusqu'à obtenir une préforme ;
- tressage d'un revêtement tressé externe recouvrant l'ensemble ;
- apport de résine dans la préforme et polymérisation de celle-ci.

2. Procédé selon la revendication 1 dans lequel on solidarise le patch au revêtement tressé.

3. Procédé selon la revendication 2, dans lequel l'étape de solidarisation comprend une prépolymérisation de résine.

4. Procédé selon la revendication 2, dans lequel l'étape de solidarisation comprend une liaison par insertion de fibres dans une direction normale à l'empilement du patch et du revêtement tressé traversant ces derniers, par exemple par couture ou piqûre.

5. Procédé selon la revendication 1, dans lequel on place la préforme dans un moule, puis la résine est apportée dans le moule et polymérisée.

6. Procédé selon la revendication 1, dans lequel on empile plusieurs patchs les uns sur les autres.

7. Procédé selon l'une des revendications précédentes, dans lequel le ou les patchs sont en tissu sergé.

## Patentansprüche

1. Verfahren zum Herstellen eines Teils aus einem Verbundwerkstoff, umfassend die Schritte:
- Herstellen eines Dorns,
- Flechten eines Überzugs (11) aus Fasern um den Dorn unter bester Anpassung an die Formen des Dorns,
- lokales Aufbringen auf den geflochtenen Überzug von mindestens einem Faserflicken (12a, 12b, 12c; 14), wobei jeder Flicken derart ausgebildet ist, dass er eine ausreichende Verformbarkeit aufweist, um sich eng an den geflochtenen Überzug oder den Flicken, auf den er aufgebracht wird, anzuschmiegen,
- erforderlichenfalls Wiederholen der beiden Schritte des Flechtens und Aufbringens eines Flickens bis man einen Vorformling erhält,
- Flechten eines äußeren geflochtenen Überzugs, der die Einheit überdeckt,
- Einbringen von Harz in den Vorformling und Polymerisation des Harzes.

2. Verfahren nach Anspruch 1, wobei man den Flicken mit dem geflochtenen Überzug verbindet.

3. Verfahren nach Anspruch 2, wobei der Schritt des Verbindens eine Präpolymerisation des Harzes umfasst.

4. Verfahren nach Anspruch 2, wobei der Schritt des Verbindens eine Verbindung durch Einfügen von Fasern in einer zur Schichtung des Flickens und des geflochtenen Überzugs senkrechten Richtung umfasst, wobei die Fasern den Flicken und den geflochtenen Überzug durchsetzen, beispielweise durch Nähen oder Heften.

5. Verfahren nach Anspruch 1, wobei man den Vorformling in eine Form einsetzt und daraufhin das Harz in die Form eingebracht und polymerisiert wird.

6. Verfahren nach Anspruch 1, wobei man mehrere Flicken übereinander schichtet.

7. Verfahren nach einem der vorhergehenden Ansprüche, wobei der oder die Flicken aus Gewebe in Köperbindung sind.

## Claims

1. Method of making a composite material part comprising the steps of:
- producing a mandrel;
- braiding around the mandrel a fibre covering (11) espousing the shapes of the mandrel as closely as possible;
- locally applying over the braided covering at least one fibre patch (12a, 12b, 12c; 14), each patch being conformed to be sufficiently deformable to espouse intimately the braided covering or the patch over which it is applied;
- repeating the two steps of braiding and patch application as needed until a preform is obtained;
- braiding an external braided covering to cover everything;
- introducing resin into the preform and polymerizing it.

2. Method according to claim 1 wherein the patch is attached to the braided covering.

3. Method according to claim 2, wherein the attachment step includes resin prepolymerization.

4. Method according to claim 2, wherein the attachment step includes bonding by inserting fibres in a direction normal to the stacked patch and braided covering and passing through them, for example by sewing or stitching.

5. Method according to claim 1, wherein the preform is placed in a mould and the resin is then introduced into the mould and polymerized.

6. Method according to claim 1, wherein multiple patches are stacked on top of one another.

7. Method according to any one of the preceding claims, wherein the patch is or the patches are made of serge fabric.
